Europäisches Patentamt

European Patent Office

Office européen des brevets

(11) Veröffentlichungsnummer: **0 288 782 B1**

(12) **EUROPÄISCHE PATENTSCHRIFT**

(45) Veröffentlichungstag der Patentschrift: **22.06.94**

(21) Anmeldenummer: **88105403.5**

(22) Anmeldetag: **05.04.88**

(51) Int. Cl.$^5$: **H04N 7/137**

(54) **Anordnung zur DPCM-Codierung von Fernsehsignalen mit schneller Signalverarbeitung.**

(30) Priorität: **27.04.87 DE 3713984**

(43) Veröffentlichungstag der Anmeldung:
**02.11.88 Patentblatt 88/44**

(45) Bekanntmachung des Hinweises auf die
Patenterteilung:
**22.06.94 Patentblatt 94/25**

(84) Benannte Vertragsstaaten:
**DE FR GB IT NL**

(56) Entgegenhaltungen:
**WO-A-80/00207**
**FR-A- 2 408 945**

**PROCEEDINGS OF THE IEEE, Band 73, Nr. 4, April 1985, Seiten 592-598, IEEE, New York, US; P. PIRSCH: "Design of a DPCM codec for VLSI realisation in CMOS technology"**

(73) Patentinhaber: **SIEMENS AKTIENGESELL-SCHAFT**
**Wittelsbacherplatz 2**
**D-80333 München(DE)**

(72) Erfinder: **Matthiesen, Fred, Dipl.-Ing.**
**Kolumbusstrasse 19**
**D-8000 München 90(DE)**
Erfinder: **Schöbinger, Matthias, Dr. phil.nat**
**Schleissheimerstrasse 71**
**D-8000 München 40(DE)**
Erfinder: **Totzek, Ulrich, Dr. Ing.**
**Herzogstandstrasse 6**
**D-8000 München 90(DE)**
Erfinder: **Zehner, Bernd, Dr. Ing.**
**Therese-Giehse-Allee 23**
**D-8000 München 83(DE)**

Rank Xerox (UK) Business Services
(3.10/3.09/3.3.3)

EP 0 288 782 B1

**Beschreibung**

Die Erfindung bezieht sich auf eine Anordnung zur DPCM-Signalcodierung von Fernsehsignalen nach dem Oberbegriff des Patentanspruchs 1.

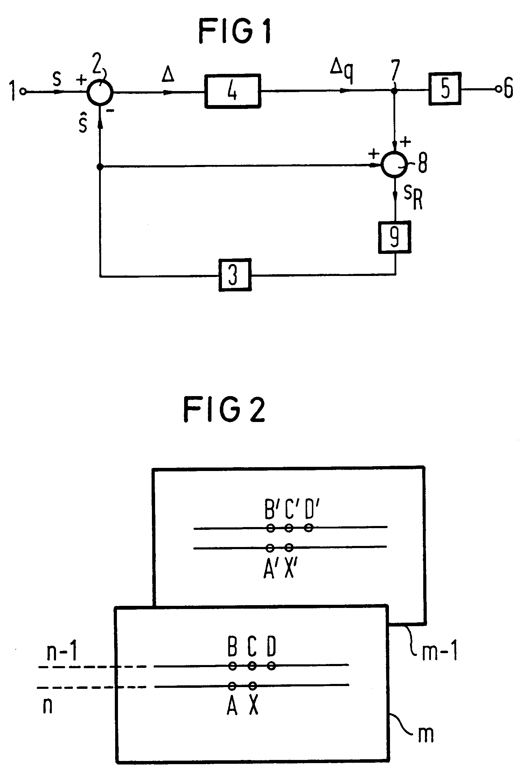

Eine Anordnung dieser Art, die zum Beispiel aus den Proc. IEEE Bd. 73, Nr. 4, April 1985, Seiten 592 bis 598, insb. Figuren 1, 2 und 4, bekannt ist, sei anhand eines in Figur 1 dargestellten Prinzipschaltbildes erläutert. Dabei liegt an einem Eingang 1 der Anordnung eine Folge von digitalisierten Bildpunktsignalen s an, die über im einzelnen nicht dargestellte Abtast- und Haltestufen zugeführt werden. Zur Reduktion des Datenflusses bemüht man sich, redundante und irrelevante Anteile des Bildsignals herauszunehmen, um beispielsweise die Bitübertragungsrate senken zu können, ohne die Bildqualität hierdurch zu verschlechtern. Im einzelnen geschieht dies dadurch, daß nicht die aufeinanderfolgenden Bildpunktsignale über den zu einer Empfangsstelle führenden Übertragungskanal übertragen werden, sondern nur die Differenzsignale, die durch eine Differenzbildung zwischen jeweils einem aktuellen Bildpunktsignal s und einem aufgrund der vorausgegangenen Bildpunktsignale in einem Prädiktor ermittelten Schätzwert $\hat{s}$ gebildet werden. Ein solches Verfahren wird auch als Differenz-Pulscodemodulation (DPCM) bezeichnet.

Die für eine DPCM-Codierung erforderliche Differenzbildung geschieht in einem Subtrahierer 2, dessen erster Eingang mit dem Eingang 1 und dessen zweiter Eingang mit einem Prädiktor 3 beschaltet ist. Jedes Differenzsignal $\Delta$, das auch als Schätzfehler bezeichnet wird, wird in einem Quantisierer 4 quantisiert, wobei das sich ergebende, mit dem Quantisierungsfehler q behaftete Differenzsignal $\Delta_q = \Delta + q$ in einem Codierer 5 codiert und über einen Ausgang 6 dem Übertragungskanal zugeführt wird. Zur Bildung des Schätzwertes $\hat{s}$ ist ein rekursiver Signalpfad vorgesehen, der von einem Schaltungspunkt 7 ausgangsseitig vom Quantisierer 4 ausgeht, einen ersten Addierer 8, eine Begrenzereinrichtung 9 und den Prädiktor 3 enthält und an den zweiten Eingang des Subtrahierers 2 geführt ist. Der Ausgang des Prädiktors 3 ist weiterhin mit einem zweiten Eingang des ersten Addierers 8 verbunden, der durch Addition des quantisierten Differenzsignals $\Delta_q$ und des Schätzwertes $\hat{s}$ ein sog. rekonstruiertes Bildpunktsignal $s_R$ bildet. Für jedes aktuelle Bildpunktsignal s liefert der Prädiktor 3 aus wenigstens einem der vorhergegangenen Bildpunktsignale den Schätzwert $\hat{s}$.

Bezeichnet man gemäß Fig. 2 den in einem Fernsehbild m in der Zeile n liegenden, aktuellen Bildpunkt mit X, den unmittelbar vorher abgetasteten Bildpunkt mit A, den X entsprechenden Bildpunkt der vorhergehenden Zeile n - 1 mit C und die dem letzteren benachbarten, unmittelbar vor bzw. nach diesem abgetasteten Bildpunkte mit B und D und bezeichnet man weiterhin die entsprechenden Bildpunkte des vorhergegangenen Bildes m - 1 mit X' und A' bis D', so ergibt sich folgendes: Man kann zur Bildung des Schätzwertes $\hat{s}$ für das Bildpunktsignal von X die Bildpunktsignale von wenigstens einem der Punkte A bis D heranziehen, wobei man von einer zweidimensionalen (2D-) Prädiktion spricht. Verwendet man hierzu zusätzlich oder ausschließlich die Bildpunktsignale von wenigstens einem der Bildpunkte X' und A' bis D', so liegt eine dreidimensionale (3D-) Prädiktion vor. Im ersteren Falle kann der Schätzwert $\hat{s}$ beispielsweise nach der 2D-Schätzgleichung

$$\hat{s} = \alpha \cdot s_A + \beta \cdot s_B + \gamma \cdot s_C + \delta \cdot s_D \qquad (1)$$

ermittelt werden, im letzteren Fall zum Beispiel nach der 3D-Schätzgleichung

$$\hat{s} = s_X \qquad (2)$$

wobei mit $s_A$ das rekonstruierte Bildpunktsignal des Bildpunktes A bezeichnet ist, mit $s_B$ das des Bildpunktes B usw. und wobei die Koeffizienten $\alpha$, $\beta$, $\gamma$ und $\delta$ Bewertungsfaktoren darstellen, die den einzelnen Bildpunktsignalen zugeordnet sind. Die Schätzgleichung (2) ist dann zu empfehlen, wenn der auch als "Aktivität" bezeichnete Kontrat des aktuellen Bildpunkgs X zu den ihn umgebenden Bildpunkten gering ist.

Aus der französischen Anmeldeschrift FR-A-2 408 945 ist unter anderem eine Anordnung zur Kompression und Expandierung von DPCM- L Signalen bekannt, bei der ein Quantisierer in Form von Festwertspeichern vorgesehen sind, die im Vergleich zu programmierbaren Logikanordnungen (zum Beispiel PLA's) wesentlich längere Zugriffszeiten besitzen, und bei der eine Schaltung zur Bildung des Absolutwertes und Vorzeichens erforderlich ist.

Der Erfindung liegt die Aufgabe zugrunde, eine Anordnung der eingangs genannten Art anzugeben, bei der eine schnelle Signalverarbeitung gewährleistet ist. Das wird erfindungsgemäß durch eine Ausbildung der Anordnung nach dem kennzeichnenden Teil des Patentanspruchs 1 erreicht.

Der mit der Erfindung erzielbare Vorteil liegt insbesondere in den reduzierten Quantisierungslaufzeiten, die bei der Bildung der quantisierten Differenzsignale $\Delta_q$ auftreten. Die erfindungsgemäße Anordnung eignet sich sowohl zum Einsatz in 2D- als auch in 3D-DPCM-Codierungsverfahren. Sie läßt sich in relativ einfacher Weise in integrierter Schaltkriestechnik auf einem Halbleiterkörper realisieren.

Die Patentanspruche 2 und 3 sind auf bevorzugte Ausgestaltungen und Weiterbildung der Erfindung gerichtet.

Die Erfindung wird nachfolgend anhand von in der Zeichnung dargestellten, bevorzugten Ausführungsbeispielen näher erläutert. Dabei zeigt:

Figur 1 das Prinzipschaltbild einer bekannten Anordnung zur DPCM-Codierung,

Figur 2 eine Darstellung von einzelnen Bildpunkten zweier aufeinanderfolgender Fernsehbilder zur Erlauterung von Figur 1,

Figur 3 ein erstes Ausführungsbeispiel der Erfindung und

Figur 4 ein zweites Ausführungsbeispiel der Erfindung.

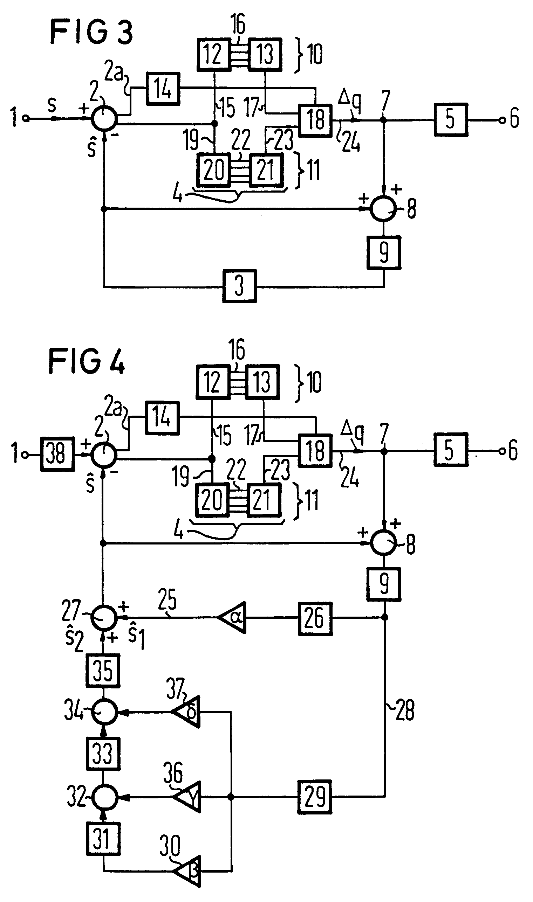

Fig. 3 zeigt eine Anordnung nach der Erfindung, die von dem in Fig. 1 dargestellten Grundaufbau eines DPCM-Coders ausgeht. Dabei sind die bereits anhand von Fig. 1 erläuterten Schaltungsteile in Fig. 3 mit denselben Bezugszeichen versehen. Der Quantisierer 4 besteht im wesentlichen aus zwei programmierbaren Logikanordnungen (PLAs) 10 und 11, von denen die erste eine UND-Ebene 12 und eine ODER-Ebene 13 enthält. Von den bei einer Wortbreite von 9 Bit vorhandenen neun Leitungen, die vom Ausgang des Addierers 2 ausgehen, wird bei einer Zweierkomplementdarstellung der digitalen Signale das das Vorzeichen angebende Bit auf einer ersten Leitung 2a übertragen, die einer Steuereinrichtung 14 zugeführt wird, während die übrigen acht Leitungen mit acht Eingangsleitungen 15 verbunden sind, die der UND-Ebene 12 der Logikanordnung 10 zugeordnet sind. Mit 16 sind Produkttermleitungen bezeichnet, die die ODER-Ebene 13 mit der UND-Ebene 12 verbinden. Dabei sind der ODER-Ebene 13 neun Ausgangsleitungen zugeordnet, die mit 17 bezeichnet sind. Diese sind mit den oberen neun Eingängen eines Multiplexers 18 verbunden. Die programmierbare Logikanordnung 11 ist gleichartig aufgebaut. Sie weist acht Eingangsleitungen 19 auf, die ebenfalls mit den genannten acht Ausgangsleitungen des Subtrahierers 2 verbunden sind. Die UND-Ebene 20 ist mit der ODER-Ebene 21 über Produkttermleitungen 22 verbunden. Der ODER-Ebene 21 sind neun Ausgangsleitungen 23 zugeordnet, die an die unteren neun Eingänge des Multiplexers 18 gelegt sind. Die neun Ausgangsleitungen des Multiplexers 18, die mit 24 bezeichnet sind, führen zum Eingang des Codierers 5 und zum ersten Eingang des Addierers 8. Der Multiplexer 18 wird vom Ausgang der Steuereinrichtung 14 in der Weise gesteuert, daß entweder die Ausgangsleitungen 17 der Logikanordnung 10 oder die Ausgangsleitungen 23 der Logikanordnung 11 auf die Ausgangsleitungen 24 durchgeschaltet werden.

Die Verarbeitung der der Logikanordnung 10 zugeführten Daten ist nun so getroffen, daß alle vom Subtrahierer 2 abgegebenen Differenzsignale, die über die Eingangsleitungen 15 zur UND-Ebene 12 gelangen und deren absolute Beträge innerhalb eines vorgegebenen Wertebereichs liegen, in einen für diesen Wertebereich spezifischen positiven Signalwert umgeformt werden, der auf den Ausgangsleitungen 17 zur Verfügung steht. Dabei werden die der Logikanordnung 10 zugeführten Differenzsignale in 10 so verarbeitet, als ob sie jeweils ein positives Vorzeichen haben würden, und zwar unabhängig von ihrem tatsächlichen Vorzeichen. Einer Mehrzahl von solchen Wertebereichen stehen ebensoviele positive spezifische Signalwerte auf den Ausgangsleitungen 17 gegenüber. Da diese Signalwerte stets positiv sind, ist diejenige der Ausgangsleitungen 17, über die das Vorzeichenbit übertragen wird, fest mit einer logischen "0" belegt.

Alle von dem Subtrahierer 2 abgegebenen Differenzsignale, die über die Eingangsleitungen 19 zur UND-Ebene 20 der Logikanordnung 11 gelangen und deren absolute Beträge innerhalb eines vorgegebenen Wertebereichs liegen, werden andererseits in einen für diesen Wertebereich spezifischen, negativen Signalwert auf den Ausgangsleitungen 23 umgeformt. Somit werden die der Logikanordnung 11 zugeführten Differenzsignale in 11 so verarbeitet, als ob sie jeweils ein negatives Vorzeichen aufweisen würden, und zwar unabhängig von ihrem tatsächlichen Vorzeichen. Einer Mehrzahl der letztgenannten Wertebereiche stehen ebensoviele negative spezifische Signalwerte auf den Ausgangsleitungen 23 gegenüber. Da die über die Ausgangsleitungen 23 abgegebenen Signalwerte stets negativ sind, ist diejenige der Leitungen 23, die das Vorzeichenbit überträgt, fest mit einer logischen "1" belegt.

Wird ein Signalwert vom Ausgang des Subtrahierers 2 abgegeben, so wird er sowohl über die Eingangsleitungen 15 der Logikanordnung 10 als auch über die Eingangsleitungen 19 der Anordnung 11 zugeführt und in beiden verarbeitet, wobei der Verarbeitung in 10 ein positives Vorzeichen und der Verarbeitung in 11 ein negatives Vorzeichen zugrundegelegt wird. Das tatsächliche Vorzeichen des von 2 abgegebenen Differenzsignals wird dann dadurch berücksichtigt, daß der Multiplexer 18 über die Steuereinrichtung 14 veranlaßt wird, im Falle eines positiven Vorzeichens die Ausgangsleitungen 17 und im Falle eines negativen Vorzeichens die Ausgangsleitungen 23 auf die Ausgangsleitungen 24 des Multiplexers durchzuschalten. Die gleichzeitige Verarbeitung der von 2 abgegebenen Differenzsignale in beiden Logikanordnungen 10 und 11 mit jeweils unterschiedlichen fiktiven Vorzeichen und die Auswahl des richtigen Ergebnisses mit Hilfe des Multiplexers 18 führt zu einer wesentlichen Verkürzung der Quantisierungslaufzeit, da die Logikanordnungen nur über acht Eingangsleitungen angesteuert werden müssen und die an sich erforderliche neunte Eingangsleitung direkt zur Steuerung des Multiplexers 18 verwendet wird. Die vorstehend beschriebene Verarbeitung der Differenzsignale in den Logikanordnungen 10 und 11 läuft darauf hinaus, daß der positive Ast der Quantisiererkennlinie in der Logikanordnung 10 und der negative Ast der Quantisiererkennlinie in der Logikanordnung 11 implementiert sind.

Fig. 4 zeigt einen nach der Erfindung ausgebildeten 2D-DPCM-Coder, der sich von Fig. 3 im wesentlichen durch einen speziellen Aufbau des Prädiktors 3 unterscheidet. Da der Prädiktor in Fig. 4 nach einer 2D-Schätzgleichung entsprechend Beziehung (1) arbeitet, weist er einen ersten Schaltungszweig 25 auf, der vom Ausgang des Begrenzers 9 über ein mit einer Taktimpulsspannung beaufschlagtes Register 26 und einen Bewerter 26a, der eine Signalbewertung mit einem Bewertungsfaktor $\alpha$ durchführt, zum ersten Eingang eines Addierers 27 hin verläuft, dessen Ausgang mit dem zweiten Eingang des Subtrahierers 2 und dem zweiten Eingang des Addierers 8 verbunden ist. Über den Schaltzweig 25 wird dem ersten Eingang des Addierers 27 ein Signalanteil $\hat{s}_1$ des Schätzwertes $\hat{s}$ zugeführt, der mit Hilfe des Bildpunktes A gewonnen wird. Ein zweiter Schaltungszweig 28 verläuft vom Ausgang des Begrenzers 9 zum zweiten Eingang des Addierers 27 und dient zur Ableitung eines zweiten, mit Hilfe der Bildpunkte B, C und D gewonnenen Signalanteils $\hat{s}_2$. Der Signalanteil $\hat{s}_2$ setzt sich dabei aus mehreren Komponenten zusammen, von denen die erste über ein Verzögerungsglied 29, einen Bewerter 30, der eine Bewertung nach dem Faktor $\beta$ durchführt und eine Kettenschaltung eines Verzögerungsgliedes 31, eines Addierers 32, eines Verzögerungsgliedes 33, eines Addierers 34 und eines Verzögerungsgliedes 35 abgeleitet wird.

Nimmt man an, daß das Verzögerungsglied 29 eine Verzögerung hervorruft, die dem Ausdruck (z-2).T entspricht, wobei z die Anzahl der Bildpunkte pro Fernsehzeile angibt und T eine Taktimpulsperiodendauer bedeutet, und geht man weiter davon aus, daß die vorzugsweise als getaktete Register ausgebildeten Verzögerungsglieder 31, 33 und 35 jeweils um eine Taktimpulsperiodendauer T verzögern, so erkennt man, daß sich die erste Komponente von $\hat{s}_2$ aus dem Bildpunkt B ableitet. Eine zweite Komponente, die über einen mit dem Faktor $\gamma$ bewertenden Bewerter 36 vom Ausgang des Verzögerungsgliedes 29 abgegriffen und einem Eingang des Addierers 32 zugeführt wird, drückt die Abhängigkeit des Signalanteils $\hat{s}_2$ vom Bildpunkt C aus, während eine dritte, über einen Bewerter 37

(Faktor $\delta$) vom Ausgang von 29 abgeleitete Komponente den Einfluß des Bildpunktes D ausdrückt. Der Schätzwert $\hat{S}$ setzt sich dann aus beiden Signalanteilen $\hat{s}_1$ und $\hat{s}_2$ additiv zusammen.

Ein weiteres, mit der Taktimpulsspannung beaufschlagtes Register 38 ist in Serie zum Eingang 1 angeordnet. Zu Beginn einer Taktimpulsperiode i seien im Register 38 ein aktuelles Bildpunktsignal s gespeichert, das z.B. dem Bildpunkt X entspricht, und im Register 26 ein rekonstruiertes Bildpunktsignal des unmittelbar vorher abgetasteten Bildpunkts A. Das letztere wird im Verlauf der betrachteten Taktimpulsperiode nach vorheriger Bewertung mit $\alpha$ im Addierer 27 zu dem über die Schaltungsteile 29 bis 35 übertragenen Signalanteil $\hat{s}_2$ addiert und das Additionsergebnis sodann im Subtrahierer 2 vom aktuellen Bildpunktsignal s subtrahiert. Nach einer Quantisierung des so erhaltenen Differenzsignals $\Delta$ im Quantisierer 4 wird das quantisierte Differenzsignal $\Delta_q$ im Addierer 8 zu dem Schätzwert $\hat{s}$ addiert und das im Begrenzer 9 begrenzte Additionsergebnis, das ein rekonstruiertes Bildpunktsignal von X darstellt, dem Eingang des Registers 26 zugeführt. Zu Beginn der nächstfolgenden Taktimpulsperiode i + 1 wird dann das zuletzt genannte Signal in 26 gespeichert und gleichzeitig vom Register 38 das nächstfolgende aktuelle Bildpunktsignal s für eine entsprechende Verarbeitung bereitgestellt.

**Patentansprüche**

1. Anordnung zur DPCM-Codierung von Fernsehsignalen, bei der von digitalisierten Bildpunktsignalen (s) jeweils Schätzwerte ($\hat{s}$) subtrahiert und die erhaltenen Differenzsignale nach einer Quantisierung und Codierung zur Signalübertragung herangezogen werden, mit einem rekursiven Signalpfad, der einen ersten Addierer (8) zur Bildung von rekonstruierten Bildpunktsignalen ($s_R$) aus den quantisierten Differenzsignalen und den Schätzwerten, eine Begrenzereinrichtung (9), einen Prädiktor (3) zur Bildung der Schätzwerte ($\hat{s}$) und einen Subtrahierer (2) zur Bildung der Differenzsignale aufweist, **dadurch gekennzeichnet**, daß ein die Quantisierung vornehmender Quantisierer (4) aus zwei programmierbaren Logikanordnungen (10, 11) aufgebaut ist, daß die Eingangsleitungen der UND-Ebenen (12, 20) beider Logikanordnungen (10, 11) mit den Ausgangsleitungen des Subtrahierers (2) mit Ausnahme der das Vorzeichenbit übertragenden Ausgangsleitung (2a) verbunden sind, daß die Ausgangsleitungen der ODER-Ebenen (13, 21) beider Logikanordnungen (10, 11) an die Eingänge eines Multiplexers (18) geschaltet sind, daß die das Vorzeichenbit übertragende Ausgangsleitung (2a) des Subtrahierers (2) mit dem Eingang einer Vorzeichensteuerung (14) beschaltet ist, deren Ausgang mit einem Steuereingang des Multiplexers (18) verbunden ist, und daß in Abhängigkeit von dem auf der einen Ausgangsleitung (2a) des Subtrahierers (2) vorhandenen Vorzeichenbit entweder die Ausgangsleitungen (17) der ODER-Ebene (13) der einen Logikanordnung (10) oder die Ausgangsleitungen (23) der ODER-Ebene (21) der anderen Logikanordnung (11) an die Ausgänge des Multiplexers (18) durchgeschaltet werden.

2. Anordnung nach Anspruch 1, **dadurch gekennzeichnet**, daß der erste Eingang des Subtrahierers (2) mit den digitalisierten Bildpunktsignalen belegt ist, daß der Ausgang des Quantisierers (4) mit dem ersten Eingang des ersten Addierers (8) verbunden ist, daß der Ausgang des ersten Addierers (8) mit dem Eingang des Prädiktors (3) beschaltet ist, dessen Ausgang sowohl an den zweiten Eingang des Subtrahierers (2) als auch an einen zweiten Eingang des ersten Addieres (8) geschaltet ist und daß der Ausgang des Quantisierers (4) mit dem Eingang eines Codierers (5) verbunden ist, dessen Ausgang den Ausgang der Anordnung bildet.

3. Anordnung nach Anspruch 2, **dadurch gekennzeichnet**, daß der Ausgang des Prädiktors aus dem Ausgang eines zweiten Addierers (27) gebildet wird, dessen erster Eingang mit dem Ausgang des ersten Addierers (8) verbunden ist und dessen zweiter Eingang über eine Serienschaltung aus mehreren Verzögerungsgliedern (29, 31, 33, 35) und weiteren Addierern (32, 34) mit dem Ausgang des ersten Addierers (8) verbunden ist, wobei die weiteren Addierer (32, 34) jeweils über einen ihrer Eingänge mit am Ausgang eines dieser Verzögerungsglieder (29) abgreifbaren zeitverzögerten Bildpunktsignalen beaufschlagt sind.

## Claims

1. Arrangement for the DPCM coding of television signals, in which estimated values $\hat{s}$ are in each case subtracted from digitized pixel signals (s) and the difference signals obtained, after quantization and coding, are used for signal transmission, comprising a recursive signal path which exhibits a first adder (8) for forming reconstructed pixel signals ($s_R$) from the quantized difference signals and the estimated values, a limiter device (9), a predictor (3) for forming the estimated values $\hat{s}$ and a subtractor (2) for forming the difference signals, characterized in that a quantizer (4) carrying out the quantization is constructed of two programmable logic arrangements (10, 11), in that the input lines of the AND levels (12, 20) of both logic arrangements (10, 11) are connected to the output lines of the subtractor (2) with the exception of the output line (2a) transmitting the sign bit, in that the output lines of the OR levels (13, 21) of both logic arrangements (10, 11) are connected to the inputs of a multiplexer (18), in that the output line (2a) of the subtractor (2) transmitting the sign bit is connected to the input of a sign controller (14), the output of which is connected to a control input of the multiplexer (18), and in that either the output lines (17) of the OR level (13) of one logic arrangement (10) or the output lines (23) of the OR level (21) of the other logic arrangement (11) are connected through to the outputs of the multiplexer (18) in dependence on the sign bit present on one output line (2a) of the subtractor (2).

2. Arrangement according to Claim 1, characterized in that the digitized pixel signals are applied to the first input of the subtractor (2), in that the output of the quantizer (4) is connected to the first input of the first adder (8), in that the output of the first adder (8) is connected to the input of the predictor (3), the output of which is connected both to the second input of the subtractor (2) and to a second input of the first adder (8), and in that the output of the quantizer (4) is connected to the input of a coder (5), the output of which forms the output of the arrangement.

3. Arrangement according to Claim 2, characterized in that the output of the predictor is formed from the output of a second adder (27), the first input of which is connected to the output of the first adder (8), and the second input of which is connected via a series circuit of a number of delay elements (29, 31, 33, 35) and further adders (32, 34) to the output of the first adder (8), the further adders (32, 34) in each case being acted on via one of their inputs by time-delayed pixel signals which can be picked up at the output of one of these delay elements (29).

## Revendications

1. Dispositif pour la modulation MICD de signaux de télévision, dans lequel respectivement des valeurs estimées (ŝ) sont soustraites de signaux numérisés (s) de points d'image et les signaux différentiels obtenus sont utilisés, après une quantification et un codage, pour la transmission de signaux, et comportant une voie récursive de transmission des signaux, qui possède un premier additionneur (8) servant à former des signaux reconstitués ($s_R$) de points d'image à partir des signaux différentiels quantifiés et des valeurs estimées, un dispositif limiteur (9), un dispositif de prédiction (3) pour la formation des valeurs estimées (s) et un soustracteur (2) pour la formation des signaux différentiels, caractérisé par le fait qu'un quantificateur (4), qui réalise la quantification, est formé de deux dispositifs logiques programmables (10, 11), que les lignes d'entrée des plans ET (12, 20) des deux dispositifs logiques (10, 11) sont reliées aux lignes de sortie du soustracteur (2) à l'exception de la ligne de sortie (2a) qui transmet le bit de signe, que les lignes de sortie des plans OU (13, 21) des deux dispositifs logiques (10, 11) sont raccordées aux entrées d'un multiplexeur (18), que la ligne de sortie (2a), qui transmet le bit de signe, du soustracteur (2) est connectée à l'entrée d'une unité de commande de signe (14), dont la sortie est connectée à une entrée de commande du multiplexeur (18), et qu'en fonction du bit de signe présent dans une ligne de sortie (2a) du soustracteur (2), soit les lignes de sortie (17) du plan OU (13) d'un dispositif logique (10), soit les lignes de sortie (23) du plan OU (21) de l'autre dispositif logique (11) sont interconnectées aux sorties du multiplexeur (18).

2. Dispositif suivant la revendication 1, caractérisé par le fait que la première entrée du soustracteur (2) est occupée par des signaux numérisés de points d'image, que la sortie du quantificateur (4) est connectée à la première entrée du premier additionneur (8), que la sortie du premier additionneur (8) est raccordée à l'entrée du dispositif de prédiction (3), dont la sortie est reliée aussi bien à la seconde entrée du soustracteur (2) qu'à une seconde entrée du premier additionneur (8), et que la sortie du quantificateur (4) est connectée à l'entrée d'un codeur (5), dont la sortie forme la sortie du dispositif.

3. Dispositif suivant la revendication 2, caractérisé par le fait que la sortie du dispositif de prédiction est formée par la sortie d'un second additionneur (27), dont la première entrée est reliée à la sortie du premier additionneur (8) et dont la seconde entrée est reliée, par l'intermédiaire d'un circuit série formé de plusieurs circuits à retard (29, 31, 33, 35) et par d'autres additionneurs (32, 33), à la sortie du premier additionneur (8), les autres additionneurs (32, 34) étant chargées respectivement, par l'intermédiaire d'une de leurs entrées, par des signaux de points d'image retardés, qui peuvent être prélevés à la sortie de l'un de ces circuits à retard (29).

# FIG 1

# FIG 2

FIG 3

FIG 4